Europäisches Patentamt

European Patent Office

Office européen des brevets

(11) Numéro de publication: **0 251 882**
**B1**

(12) **FASCICULE DE BREVET EUROPEEN**

(45) Date de publication du fascicule du brevet:
20.12.89

(21) Numéro de dépôt: 87401422.8

(22) Date de dépôt: 22.06.87

(51) Int. Cl.⁴: **E21B 41/04,** E21B 43/01,
F16L 1/04

(54) **Dispositif et méthode de mise en place et de connexion à distance d'un raccord coudé.**

(30) Priorité: 26.06.86 FR 8609421

(43) Date de publication de la demande:
07.01.88 Bulletin 88/1

(45) Mention de la délivrance du brevet:
20.12.89 Bulletin 89/51

(84) Etats contractants désignés:
**ES FR GB NL**

(56) Documents cités:
**FR-A- 2 415 251**
**FR-A- 2 555 249**
**GB-A- 2 024 766**
**GB-A- 2 153 332**
**GB-A- 2 163 404**
**US-A- 4 120 171**

(73) Titulaire: **INSTITUT FRANCAIS DU PETROLE, 4, Avenue
de Bois-Préau, F-92502 Rueil-Malmaison(FR)**

(72) Inventeur: **Castel, Yvon, 35, rue des Cerisiers,
F-78290 Croissy S/Seine(FR)**

(74) Mandataire: **Aubel, Pierre et al, Institut Français du
Pétrole Département Brevets 4, avenue de Bois Préau,
F-92502 Rueil-Malmaison(FR)**

**Description**

La présente invention concerne une méthode et un dispositif de mise en place et de connexion à distance d'un raccord coudé ou raccord col de cygne, sur une installation éloignée, à partir d'une installation principale, la connexion se faisant entre les extrémités de deux conduites (voir GB-A 2 163 404).

Cette invention peut être appliquée notamment au domaine de la production d'effluents pétroliers au large des côtes, lorsqu'il s'agit de raccorder l'extrémité d'une colonne montante immergée à une profondeur donnée, cela à partir d'une installation principale située au-dessus de l'installation éloignée, ladite installation principale pouvant être un bâtiment de surface et ladite installation éloignée pouvant être une bouée immergée, la profondeur d'immersion pouvant être d'environ 100 mètres.

Jusqu'à présent, de telles connexions posaient des problèmes d'entretien et faisaient appel à des plongeurs, ce qui limitait la profondeur à laquelle elles pouvaient être réalisées.

La présente invention supprime ces problèmes en fournissant un dispositif de mise en place à distance d'un raccord coudé sur une installation éloignée à partir d'une installation principale qui est située au-dessus de l'installation éloignée, ce dispositif comportant un cadre support, le raccord coudé ayant au moins deux extrémités dont au moins l'une coopère avec une extrémité d'une première ligne solidaire de l'installation éloignée, le cadre comportant un organe permettant sa suspension à un élément de sustentation relié à l'installation principale et un organe support dudit raccord coudé, les organes étant fixés audit cadre. Ce dispositif est notamment caractérisé en ce qu'au moins l'un des organes est mobile relativement au cadre.

L'organe support ou l'organe de suspension pourra comporter des moyens permettant de se mouvoir relativement au dispositif dans un plan sensiblement perpendiculaire à l'axe de l'élément de sustentation.

L'organe support pourra être mobile et être associé à des moyens de positionnement comprenant en combinaison un organe d'approche et un organe de positionnement, l'organe d'approche produisant un mouvement de translation selon un axe d'une traverse sur laquelle est placée l'organe de positionnement, l'organe de positionnement étant adapté à réaliser au moins une rotation et au moins deux translations, les directions des translations ne faisant pas entre elles un angle nul et étant toutes deux perpendiculaires à l'axe de translation d'approche, la rotation ayant son axe parallèle à l'axe de translation d'approche.

Le dispositif pourra comporter des moyens adaptés à réaliser la connexion d'une deuxième extrémité du raccord avec une extrémité d'une deuxième ligne par déplacement sur un même alignement de l'extrémité de la deuxième ligne et de la deuxième extrémité du raccord.

Le dispositif permettant la connexion de l'une des extrémités du raccord sur une extrémité d'une ligne pourra comporter un connecteur verrouillable permettant d'effectuer une connexion et un verrouillage du connecteur.

Le dispositif pourra comporter des moyens de commande du connecteur permettant d'effectuer le verrouillage du connecteur à partir de l'installation principale.

Le dispositif pourra comporter des moyens d'immobilisation du cadre sur l'installation éloignée.

L'organe d'approche pourra comporter au moins un vérin mouflé.

L'organe d'approche pourra comporter au moins un vérin dont l'axe est sensiblement parallèle à l'axe de translation d'approche et le vérin pourra être situé à l'intérieur des montants du dispositif.

L'invention fournit également une méthode de raccordement à distance utilisant le dispositif, notamment caractérisée par la succession des étape suivantes :

- on effectue la descente du cadre à partir de l'installation principale jusqu'à l'installation distante au moyen de l'élément de sustentation,
- on réalise une combinaison de mouvements d'une part de l'élément de sustentation et d'autre part, soit de l'organe support, soit de l'organe de suspension, de manière à placer ledit raccord coudé dans une position prédéterminée.

Après avoir placé le raccord dans la position prédéterminée, on pourra effectuer une première connexion de la première extrémité du raccord avec la première extrémité de la première ligne.

Après avoir effectué cette étape, on pourra aligner l'extrémité de la deuxième ligne avec l'extrémité du raccord et on pourra procéder à leur rapprochement jusqu'à réaliser une deuxième connexion effective de ces deux éléments.

Les connexions étant effectuées avec des connecteurs verrouillables, on pourra effectuer le verrouillage de la première connexion avant ou simultanément celui de la deuxième connexion.

On pourra réaliser l'une ou l'autre des connexions depuis l'installation principale.

La présente invention sera mieux comprise et ses avantages apparaîtront plus nettement à la description qui suit, nullement limitative, de deux exemples particuliers de réalisation illustrés par les figures ci-annexées, parmi lesquelles :

- la figure 1 représente un schéma d'ensemble d'une colonne de production de pétrole et sa liaison à un navire par des lignes de transfert,
- la figure 2 montre en vue de dessus la disposition des raccords col de cygne sur une bouée sous-marine,
- la figure 3 illustre en détail d'agencement des éléments des conduites pour le transfert des effluents pétroliers sur une installation principale, telle une bouée,
- la figure 4, montre un dispositif permettant la mise en place et la connexion du raccord col de cygne,
- la figure 5 illustre en détail le chariot de positionnement du dispositif de la figure 4,
- la figure 6 représente un autre mode de réalisation d'un dispositif permettant la mise en place et la connexion du raccord col de cygne, et
- la figure 7 montre en vue de dessus le dispositif illustré en vue de face sur la figure 6.

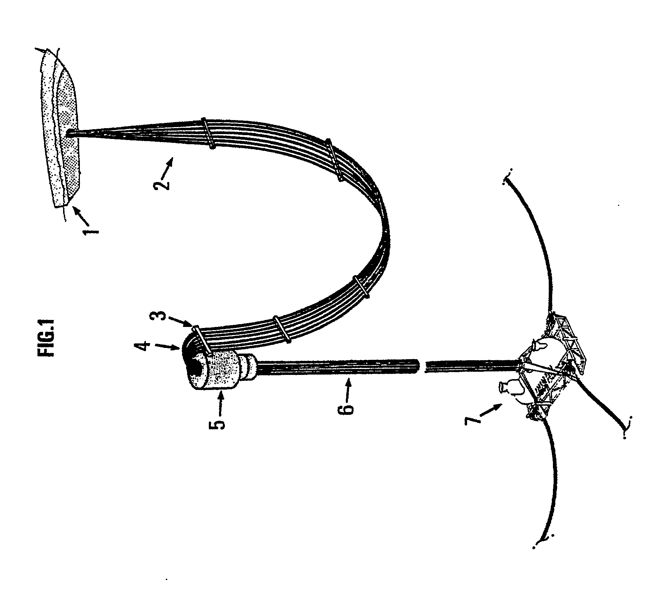

La description qui suit concerne le cas particulier de la mise en place et de la connexion de raccords 4 en forme de col de cygne (Fig. 1), d'une part aux extrémités supérieures de conduits de transfert 6 de la production d'un site de production sous-marin, ces extrémités étant solidaires d'une bouée immergée 5 et d'autre part aux extrémités des lignes de transfert 2 situées au niveau d'une barrette 3. Chacun des raccords n'assure normalement le raccordement d'un seul conduit à une seule ligne. Le faisceau de lignes de transfert 2 pourra être relié à un navire 1 se trouvant à la surface de l'eau et pourra servir à l'acheminement de la production du puits sous-marin au navire 1. L'ensemble des conduits de transfert est relié à sa partie inférieure à une embase 7 placée sur fond sous-marin et servant de collecteur du ou des puits.

Toutes les lignes de commandes, notamment électriques ou hydrauliques, qui assurent à distance les différentes opérations possibles du dispositif selon l'invention, n'ont pas été représentées afin de ne pas surcharger les dessins.

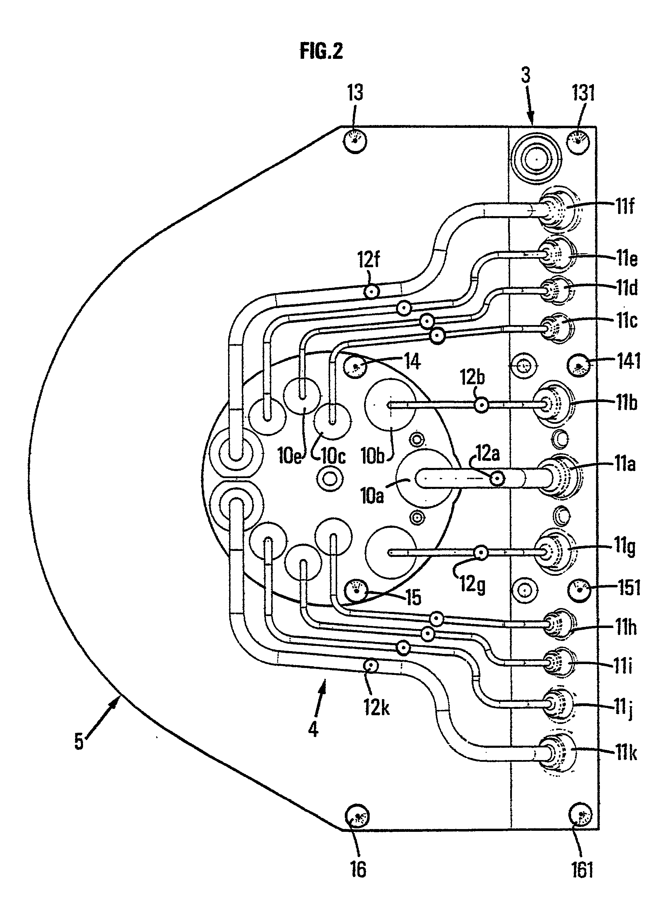

Sur la figure 2, qui montre en détail et en vue de dessus la disposition générale des raccords col de cygne sur la bouée 5, les références commençant par 10 sont relatives aux premiers connecteurs des raccords, les références commençant par 11 sont relatives aux deuxièmes connecteurs des raccords et les références commençant par 12 sont relatives aux mandrins de manipulation et de contrôle de chacun des raccords désignés par les lettres référencées a, b, c...k. Les raccords col de cygne a...k qui sont représentés sur les figures 1, 2 et 6 sont d'un type simplifié et ne comportent qu'un nombre minimum d'éléments. Chacun de ces raccords peut être spécialisé dans une application qui dépend de la ligne et de la conduite auxquelles il est relié.

Ainsi, par exemple, le raccord

a : pourra concerner la collecte de tous les effluents venant du puits,

b : les commandes hydrauliques de la tête du puits,

c : l'amenée d'air pour une capsule de plongée,

d et i : l'échappement d'air de la capsule de plongée,

e : la purge d'azote de la capsule de plongée,

f : l'injection d'eau dans le puits,

g : l'injection de gaz d'allégement (gas lift en langue anglaise),

h : l'amenée d'azote pour la cloche de plongée lorsqu'elle n'est pas utilisée,

j : les essais et les interventions dans les lignes verticales telles que le raclage,

k : l'injection de gaz dans le puits.

Les diamètres des raccords sont adaptés aux exigences du service qui découlent notamment des caractéristiques des fluides susceptibles de passer dans les raccords ainsi qu'à leur(s) débit(s).

La configuration des raccords est adaptée à permettre un accès aisé en vue de leur manutention, cela compte tenu de leur poids qui peut, par exemple, aller pour ces raccords simplifiés jusqu'à environ 5.000daN et leur longueur qui peut atteindre par exemple 7 à 8 mètres, ceci en tenant compte d'une largeur de bouée ou d'une longueur de support 3 par exemple d'environ 12 mètres.

Les mandrins de manipulation et de contrôle des raccords, tel le mandrin 12a, sont de préférence situés à l'aplomb du centre de gravité des raccords lorsque ceux-ci sont en position de service.

Les poteaux-guides 13, 131, 14, 141, 15, 151, 16, 161 qui assurent le positionnement et l'immobilisation du dispositif de mise en place et de connexion des raccords, sont disposés de telle manière que le dispositif puisse occuper plusieurs emplacements juxtaposés au-dessus des mandrins de manipulation et de contrôle. Sur la figure, l'alignement des poteaux 13, 14, 15, 16 est parallèle à celui des poteaux 131, 141, 151, 161. De plus les poteaux-guides 13, 14 ou 14, 15 ou 15, 16 ou 131, 141 ou 141, 151 ou 151, 161 sont équidistants entre eux afin de permettre au dispositif d'occuper trois emplacements, ceci dans le but notamment d'optimiser les dimensions du dispositif.

Lorsque le dispositif selon l'invention est mis en place sur les poteaux 13, 14, 141 et 131, il pourra manipuler les raccords 11c, 11d, 11e et 11f. Ainsi, le dispositif selon l'invention peut manipuler plusieurs raccords à partir d'un même emplacement.

Pour des dimensions de bouées plus étroites, on pourrait par exemple limiter le nombre de ces poteaux à 6, voire à 4, le nombre de 3 poteaux-guides étant un minimum pour assurer l'isostatisme du dispositif.

A l'extrémité supérieure de ces poteaux, peut être disposée une ligne-guide remontant jusqu'à une installation de surface, telle un navire, à partir de laquelle le dispositif selon l'invention est descendu. Ces lignes peuvent être posées, par quatre à la fois, au moyen d'un dispositif tel que celui décrit dans la demande de brevet français FR-A-2.529.253. Le nombre minimum de ces lignes pouvant, par emplacement du dispositif de mise en place de raccord, peut être réduit à deux de façon à guider et empêcher toute rotation du dispositif. Ainsi, sur une bouée immergée comportant 8 poteaux-guides, le nombre de lignes-guides à placer peut être réduit à 4, par exemple en les plaçant sur les poteaux 13, 141, 15 et 161.

On pourra utiliser comme ensemble de fixation de ligne-guide sur un poteau-guide un dispositif de connexion deconnectable tel que celui décrit dans le brevet français FR-A-2.497.899. Ainsi, grâce à un outil de déconnexion tel celui faisant l'objet de la demande de brevet français FR-A-2.525.682, on pourra retirer la ligne-guide une fois son utilisation terminée.

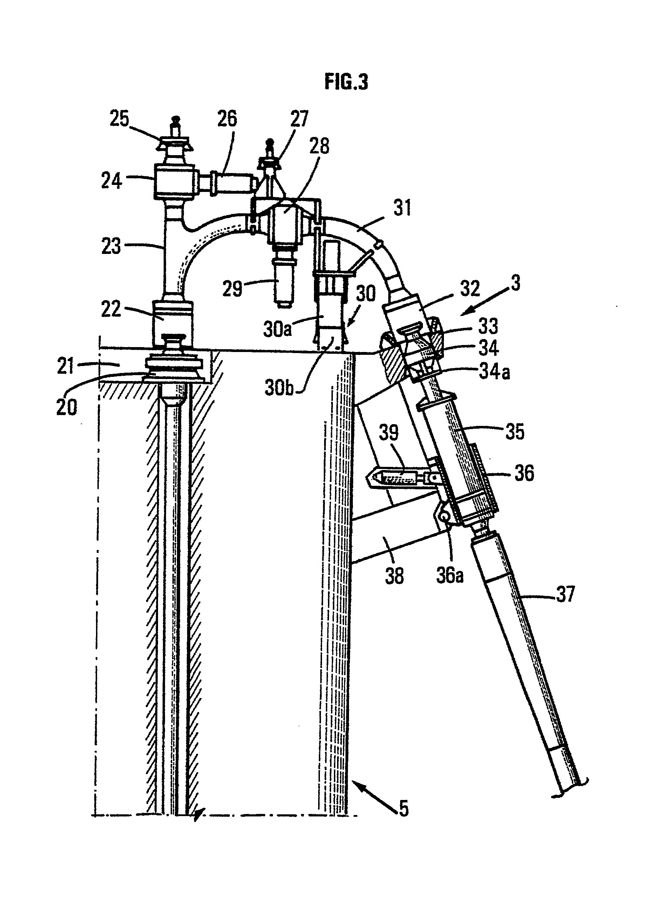

La figure 3 montre en détail sur une installation principale, telle une bouée 5, l'agencement des éléments de conduites pour le transfert des effluents pétroliers utilisant un raccord coudé en forme de col de cygne multifonctionnel.

L'extrémité 20 du conduit de transfert coopère avec un premier connecteur verrouillable 22 pour assurer le transfert des fluides. Les extrémités des conduits de transfert sont placées sur la bouée dans une même cuvette 21. Au lieu d'être raccordée à l'extrémité d'un conduit de transfert solidaire de l'installation éloignée, l'une des extrémités du raccord coudé pourrait coopérer avec n'importe quel type d'élément complémentaire solidaire de ladite installation, cet élément pouvant être, par exemple une prise électrique de puissance ou de mesure ou tout embout d'une ligne devant être connecté à un raccord coudé.

Le connecteur 22 est relié à un manchon en Y 23 qui se divise à sa partie supérieure en deux voies dont une est située dans l'axe du conduit. Cette voie axiale qui, en service normal, est obturée par la vanne de prélévement 24, cette vanne est actionnée par un mécanisme 26. Le manchon en Y 23 pourra comporter un déviateur ou pièce de section biseautée qui normalement obstrue la voie axiale, mais permet par son escamotage, de laisser passer les outils, tels des outils racleurs, par cette voie axiale.

Cette voie axiale se termine par un mandrin de connexion 25, lequel est recouvert hors service par un chapeau anti-corrosion. Ce mandrin permet la connexion de la voie axiale du raccord à une conduite descendue depuis la surface, cette conduite étant utilisable lorsque l'on désire avoir un accès direct au conduit de transfert. Ceci peut notamment se produire lors du nettoyage du conduit ou de la descente d'outils dans ce même conduit, le déviateur s'escamotant dans ce cas et revenant en place par la suite.

Sur la voie latérale du manchon Y 23 est placée une vanne d'isolement 28 qui est actionnée par le mécanisme 29. Les deux moteurs 26 et 29 des deux vannes 24 et 28 peuvent être reliées à un multiconnecteur hydraulique ou électrohydraulique 30 dont la partie supérieure 30a est solidaire du raccord et la partie inférieure 30b de la bouée. La partie inférieure est elle-même reliée à l'installation de surface par un flexible qui peut être l'un des flexibles du faisceau représenté à la figure 1.

Grâce à ce multiconnecteur, il est possible d'actionner l'ouverture ou la fermeture des vannes depuis la surface et si on le désire, le déverrouillage et le verrouillage du connecteur 31, ceci dans le cas où l'on souhaiterait déconnecter de la bouée un ou des flexibles. Ce type de connecteur est réalisé par la société MATRA A.C.B.

La commande du verrouillage et du déverrouillage des connecteurs 22 et 32 peut être réalisée par l'intermédiaire du mandrin de manipulation et de contrôle 27 dont les fonctions pendant la pose du raccord sont la préhension du raccord et son verrouillage aux conduites entre lesquelles il est situé.

Le coude 31 assure la liaison entre la vanne 28 et un deuxième connecteur verrouillable 32 qui est centré dans le support 33.

Ce support assure aussi le guidage de l'extrémité 34 de la conduite flexible qui est montée sur une partie rigide 35 du flexible. Cette partie rigide coulisse à l'intérieur d'une barrette-guide 36 solidaire par un axe d'articulation 36a et un vérin 39 de la console 38. La mise en place du flexible 37 dans la barrette 36 peut être assurée par câble alors que l'extrémité du flexible est écartée de l'installation principale grâce au vérin 39.

Pour effectuer la connexion de l'extrémité avec le raccord au niveau du connecteur 32, le vérin 39 fait pivoter la barrette 36 de façon à faire coïncider l'axe du connecteur avec celui de l'extrémité du flexible et un outil, tel que celui décrit dans la demande de brevet français EN. 85/15.500, s'appuyant sur la butée 34a, produit le glissement de la partie 35 dans la barrette 36 et l'engagement de l'extrémité 34 dans le support 33 jusqu'à pouvoir obtenir le verrouillage de la connexion au niveau du connecteur 32. Les éléments mis en place, le verrouillage peut alors être effectué grâce au mandrin 27.

Pour des dimensions comparables à celles mentionnées pour le raccord simplifié, le raccord col de cygne multifonctionnel qui comprend les pièces 22 à 29, 30a, 31 et 32, peut avoir un poids atteignant 11.000daN.

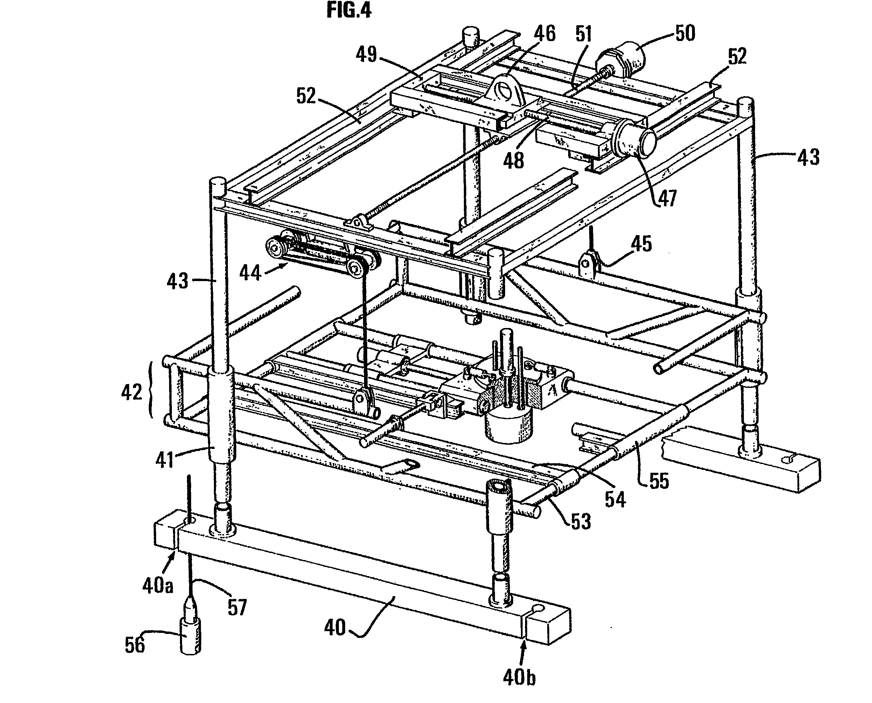

La figure 4 représente un dispositif selon l'invention, appelé aussi cadre, destiné à la mise en place et à la connexion de raccord col de cygne.

Le cadre comporte à sa partie inférieure deux traverses supports 40 dans lesquelles coulissent en 40b au moins une des deux lignes-guide 57 montées sur les poteaux-guides 56. Les lignes-guides peuvent être introduites latéralement grâce aux fentes 40a de la traverse.

Selon ce moyen classique, les fentes 40a sont obturées par des portes qui permettent aux lignes 57 de rester solidaires de la traverse 40. Sur les traverses 40 sont disposés quatre montants 43 rigidifiés entre eux par une structure mécano-soudée. Sur ces montants 43 coulissent quatre guides 41 d'une traverse mobile d'approche 42 grâce à deux vérins mouflés 44 fixés à la structure. Une extrémité de chacun des câbles de ces vérins mouflés comporte un oeil relié par une manille à points de fixation 45 solidaire de chacune des traverses d'approche 42.

Selon un autre mode de réalisation non représenté, il est possible que les traverses supports 40 soient montées coulissantes sur une certaine partie de la longueur des montants, et que le mouvement de ces traverses relativement aux montants soit amorti par un dispositif approprié de manière que l'accostage des traverses avec les poteaux-guides s'effectue en douceur. Le dispositif amortisseur est aussi adapté à ce qu'aucun mouvement parasite n'apparaisse dans le cadre lorsque celui-ci a été immobilisé sur le poteaux-guides.

A la partie supérieure du cadre est disposé un organe de suspension du cadre à un élément de sustentation s'étendant depuis l'installation principale. Cet organe peut être fixe ou de préférence mobile et comporter des moyens permettant la correction des inclinaisons du cadre lors de sa descente et de son positionnement sur les poteaux-guides 56. Ces moyens sont reliés par un anneau 46 à l'extrémité d'un élément de sustentation, tel un câble, qui assure la descente du cadre. L'anneau 46 se meut relativement au cadre dans un plan sensiblement perpendiculaire à l'axe de l'élément de sustentation de préférence selon deux directions perpendiculaires grâce à deux systèmes vis-écrou pilotés par deux moteurs 47 et 50. L'anneau 46 coulisse dans les guides du chariot d'inclinaison 49 grâce à la vis 48 qui est actionnée par le moteur 47, lequel peut être par exemple du type hydraulique ou électrique. Le chariot guidé par deux rails 52 coulisse grâce à la vis 51 et le moteur 50 d'un type similaire au moteur 47.

Ces moyens d'inclinaison offrent, en modifiant la position de l'anneau 46 en fonction des forces agissant sur le cadre, tels le poids, la force du courant, la poussée d'Archimède... la possibilité de rectifier la position verticale du cadre afin qu'il soit correctement positionné lors de la descente vers les poteaux-guides ou lors de sa remontée. En effet, dans certains cas, tels la pose de raccords lourds et encombrants, il n'est pas toujours possible d'ajuster ou de modifier notablement les inclinaisons du cadre par le seul déplacement de la platine de manoeuvre 64.

Les moyens de positionnement peuvent comporter un organe permettant d'approcher la position à établir et un organe de positionnement fin destiné à obtenir précisément cette position, ledit organe de positionnement fin étant porté par ledit organe d'approche.

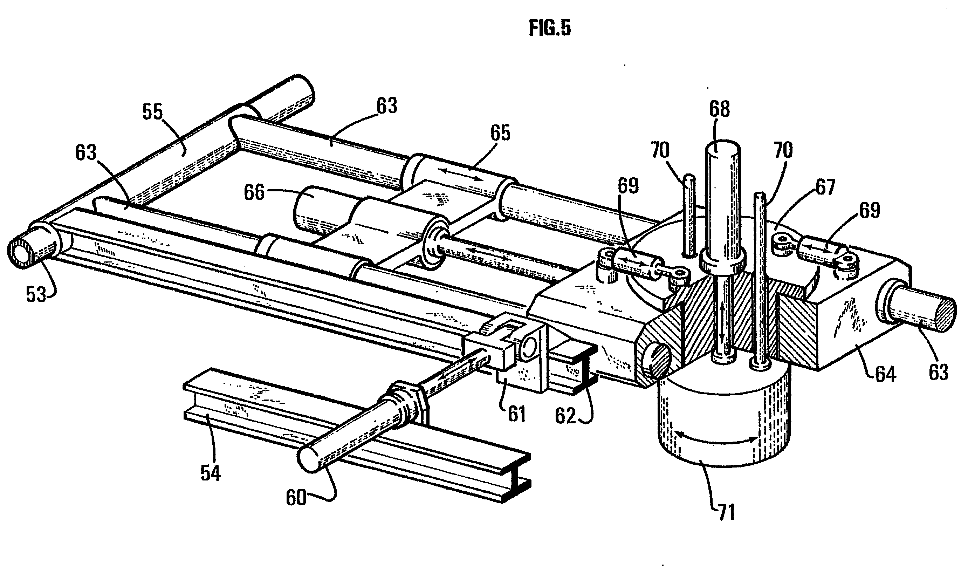

La traverse mobile d'approche 42 comporte des guides 53 sur lesquels s'appuyent le chariot de positionnement 55 représenté plus en détail à la figure 5. Le mouvement de ce chariot 55 suivant les guides 53 est assuré par le vérin 60 dont le corps est monté sur la butée réglable 54. Le réglage de cette butée est réalisé soit manuellement, soit automatiquement par son immobilisation sur le guide 53. La potence 61 assure la liaison entre l'extrémité de la tige du vérin 60 et la poutre 62 du chariot de positionnement.

Perpendiculairement au guides 53 du chariot, sont disposés sur le chariot de positionnement des moyens de guidage de la platine de manoeuvre 64. Ces moyens peuvent être, par exemple, des glissières cylindriques 63 coopérant avec des alésages de la platine. La platine est déplacée sur les glissières grâce à un vérin 66, le corps de ce vérin est solidaire d'une butée 65 dont la position est réglable automatiquement ou manuellement sur les glissières cylindriques 63, l'extrémité de la tige de ce vérin est liée à la platine.

La platine de manoeuvre 64 porte un rotor 67 tournant grâce à des moyens de mise en rotation, tel un vérin 69 fixé à la fois sur la platine et sur le rotor de façon à réaliser une déviation angulaire du rotor. Sur la figure 5, deux vérins 69 ont été représentés. Cette solution permet un meilleur équilibrage du couple de rotation.

Sensiblement en coïncidence avec l'axe de rotation du rotor est disposé un vérin de positionnement vertical 68 dont le corps est lié au rotor 67 et la tige à un organe support ou prise de manoeuvre 71 du raccord coudé située en dessous du rotor 67. La prise 71 est maintenue solidaire en rotation du rotor grâce à deux tiges guidées 70 fixées à la prise et coulissant dans des passages aménagés dans le rotor.

La prise de manoeuvre 71 est adaptée à coopérer avec le mandrin de manipulation et de contrôle 27 (Fig. 3) ou 12 (Fig. 2) pour assurer le positionnement des raccords et le verrouillage de ces raccords avec les extrémités des conduits entre lesquels ils sont placés. La prise et le mandrin sont liés mécaniquement au cours de la pose et de la dépose des raccords et laissent circuler entre eux éventuellement le fluide hydraulique de commande du verrouillage et du déverrouillage.

Lorsque le raccord comporte un multiconnecteur hydraulique 30a (Fig. 3), il est aussi possible de commander le verrouillage par celui-ci. Cependant ce verrouillage ne peut se faire que s'il existe au moment où on l'effectue, une source de puissance hydraulique alimentant les organes de verrouillage du connecteur à travers le multiconnecteur. Cette alimentation peut se faire, par exemple par une ligne flexible hydraulique qui aura été préalablement mise en place.

Même dans le cas où il est possible de commander le verrouillage par la bouée, il est préférable, pour des raisons de sécurité, de pouvoir aussi le faire grâce au mandrin et à la prise qui coopère avec lui.

Sur les figures 4 et 5, les déplacements des éléments peuvent être réalisés indistinctement par des systèmes vis-écrou, des moteurs electriques ou hydrauliques, des vérins ou tout autre moyen approprié. Cependant, l'homme de l'art pourra adapter le choix de ces moyens notamment en fonction de leur fiabilité, leur précision, leur vitesse et leur coût.

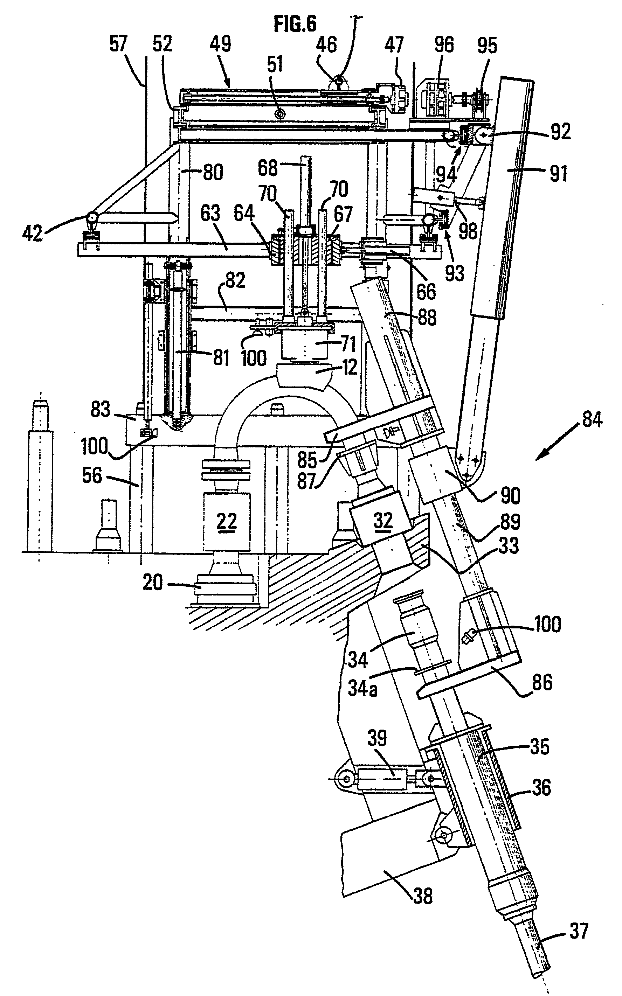

La figure 6 représente un autre dispositif permettant la mise en place et la connexion de raccord col de cygne, possédant une pince de connexion de la conduite flexible au raccord, dans une phase d'utilisation de cette pince.

Le cadre ayant été maintenu par l'anneau 46 et descendu par les lignes-guides situées dans le prolongement des poteaux-guides, s'immobilise en fin de course sur les poteaux-guides 56 grâce à ses traverses d'immobilisation 83.

Sur ces traverses sont placés quatre montants téléscopiques 80 mus grâce à des moyens appropriés, tels des vérins. Ces montants sont rigidifiés entre eux, d'une part sur leur partie fixe par des traverses 82, 83 et d'autre part à leur sommet au moyen de traverses entre lesquelles sont placés des moyens d'inclinaison du cadre tels ceux représentés à la figure 4.

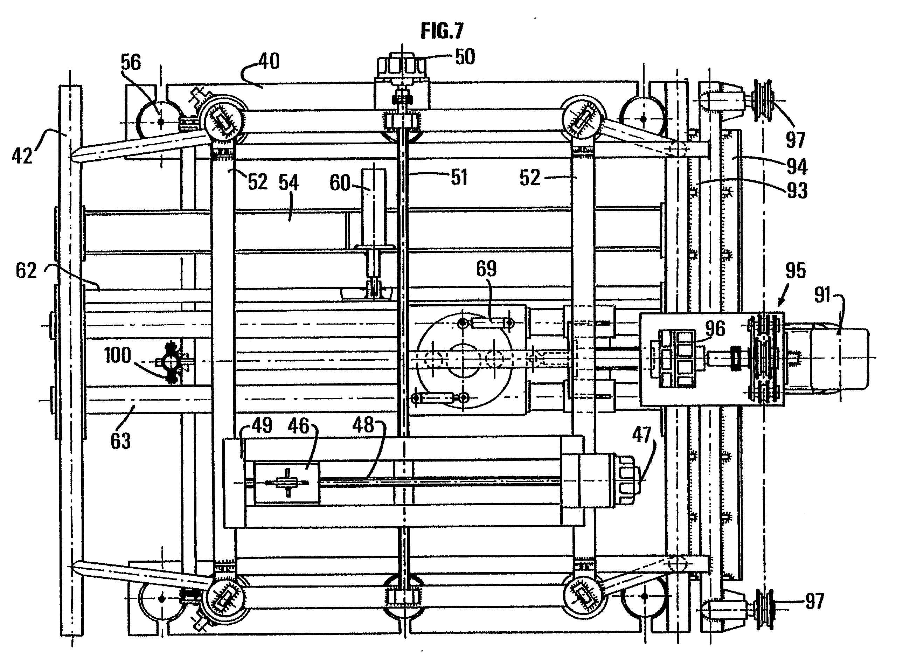

Selon les vues des figures 6 et 7, ces moyens d'inclinaisons comportent un chariot 49 possédant des guides dans lesquels coulisse l'anneau 46. Celui-ci est déplacé grâce à un système vis-écrou dont la vis est commandée par un moteur hydraulique 47. Ce chariot glisse à son tour sur les rails 52 grâce à un système vis-écrou 51 commandé par un moteur 50 (Fig. 7).

La traverse d'approche 42 solidaire des parties supérieures mobiles des montants porte et guide la platine 64 dont les mouvements sont produits notamment par les vérins 66 et 60, les directions de déplacement produits par ces vérins étant perpendiculaires entre-elles comme le montrent les figures 5 et 7.

La prise de manoeuvre 71 est guidée en rotation et translation par les barres 70. Cette prise est mue verticalement par le vérin 68 et en rotation en même temps que le rotor 67 qui comporte des moyens de mise en rotation ad hoc, tels un ou plusieurs vérins, comme représenté sur les figures 5 et 7. La prise de manoeuvre 71 est fixée au mandrin de manipulation et de contrôle 12 solidaire du raccord col de cygne (la figure 6 représente le cas d'un raccord simplifié) comportant à chacune de ses extrémités un connecteur 22 et 32 adaptés à se connecter avec les extrémités 20 et 34 de conduites. La continuité de la ou des lignes de commande du verrouillage du ou des connecteurs montés sur le raccord se fait à travers le mandrin, la prise et une liaison jusqu'au poste de commandement qui peut être en surface.

Une fois le cadre descendu, mis en place et immobilisé, la traverse d'approche mobile 42 est descendue au moyen des vérins disposés dans les montants téléscopiques (Fig. 6) ou par un vérin mouflé (Fig. 5), de manière à approcher le raccord de sa position de service. L'ajustage du raccord au niveau du premier connecteur 22 avec l'extrémité 20 de la colonne de transfert pouvant être très précis (par exemple H7g6), on utilise les déplacements fins de la platine 64 de la prise 71 et du rotor 67 pour réaliser cet assemblage précis.

Par la même opération, le deuxième connecteur 32 est positionné dans un logement du support 33.

Ensuite, après que l'extrémité 34 du flexible ait été placé dans la barrette-guide 36 et que l'axe de l'extrémité 34 ait été mise sensiblement en coïncidence, au moyen du vérin 39, avec l'axe du connecteur 32, une pince 84 dont les mors 85 et 86 prennent respectivement appui sur les épaulements 87 et 34a, fait coulisser l'embout 34 à travers le support 33 vers le connecteur 32 jusqu'à une position permettant le verrouillage du connecteur. Le verrouillage à distance des connecteurs peut s'effectuer soit après chaque jonction des connecteurs avec les conduites soit lorsque les deux jonctions ont ete effectuées.

La pince 84 comprend deux mors 85 et 86 qui prennent respectivement appui sur l'épaulement 87 du raccord col de cygne et sur l'épaulement 34a de l'embout 34 de la conduite flexible 37. Ces mors sont actionnés l'un et l'autre par un vérin 88 dont le corps est lié au mors supérieur 85 et la tige 89 liée au mors inférieur 86. Sur cette tige 89 coulisse un mandrin porteur 90 monté entre deux butées (non représentées). Une telle pince est décrite plus en détail dans la demande de brevet français EN. 85/15.500. La pince est fixée par le mandrin porteur 90 au bras 91, par exemple au moyen d'un gousset. Le bras articulé 91 est fixé sur l'axe 92 d'un chariot transbordeur mobile en translation sur les glissières 93 et 94 solidaires du cadre.

Les différentes positions que peut prendre le chariot correspondent aux différents postes de connexion de la pince 84. Chaque poste se trouve en face de chacun des deuxièmes connecteurs 12 des raccords coudés qui sont situés entre les montants du cadre, lesquels montants reposent sur des poteaux-guides tels 13, 131, 14, 141 ou 14, 141, 15, 151, etc.

Le mouvement de ce chariot est assuré par les extrémités d'une chaîne ou d'un câble formant une boucle rectangulaire de grand axe horizontal. Cette chaîne ou ce câble est guidé par quatre galets 97 situés dans un même plan et est entrainé par un agencement de poulies ou de couronnes dentées 95 actionnées par un moteur électrique ou hydraulique 96, fixe par rapport au cadre.

Le mouvement du bras 91 autour de l'axe 92, qui permet le désengagement de la pince après son utilisation, est assuré par le vérin 98.

La télécommande de tous les éléments du cadre est assistée de moyens de visualisation et de repérage 100, tels des caméras de télévision observant, si besoin avec des projecteurs, notamment les espaces de manoeuvre.

Lorsque le cadre est maintenu libre sans être positionné sur l'installation éloignée, les déplacements du raccord en vue de son positionnement pourront être obtenus uniquement, soit par l'organe de suspension, soit par l'organe support.

Dans la présente description, l'angle entre elles des extrémités du raccord coudé est voisin de 20°, ce qui correspond à une forme et une courbure particulièrement bien adaptées au flexible qui doit être rattaché depuis la surface à une bouée immergée à 100 mètres environ sous la surface de l'eau. On pourra sans inconvénient le faire varier dans de larges proportions. Un angle de 0° permettra au raccord coudé de se connecter simultanément aux extrémités des deux lignes.

## Revendications

1. - Dispositif de mise en place à distance d'un raccord coudé sur une installation éloignée à partir d'une installation principale qui est située au-dessus de l'installation éloignée (5), ce dispositif comportant un cadre support, le raccord coudé (4) ayant au moins deux extrémités (22, 32) dont au moins l'une coopère avec une extrémité (20) d'une première ligne solidaire de ladite installation éloignée (5), ledit cadre comportant un organe permettant sa suspension (46) à un élément de sustentation relié à l'installation principale et un organe support (71) dudit raccord coudé, lesdits organes étant fixés audit cadre, caractérisé en ce qu'au moins l'un desdits organes est mobile relativement audit cadre.

2. - Dispositif selon la revendication 1, caractérisé en ce que ledit organe support (71) ou ledit organe de suspension (46) comporte des moyens (47, 48, 50, 51, 52, 53, 54, 55, 60 à 67, 69) permettant de se mouvoir relativement audit dispositif dans un plan sensiblement perpendiculaire à l'axe de l'élément de sustentation.

3. - Dispositif selon l'une des revendications 1 et 2, caractérisé en ce que l'organe support (71) est mobile et est associé à des moyens de positionnement comprenant en combinaison un organe d'approche (44, 43) et un organe de positionnement (53 à 55, 60 à 71), ledit organe d'approche produisant un mouvement de translation selon un axe d'une traverse (42) sur laquelle est placée ledit organe de positionnement, ledit organe de positionnement étant adapté à réaliser au moins une rotation et au moins deux translations, les directions desdites translations ne faisant pas entre elles un angle nul et étant toutes deux perpendiculaires audit axe de translation d'approche, ladite rotation ayant son axe parallèle à l'axe de translation d'approche.

4. - Dispositif selon la revendication 3, caractérisé en ce qu'il comporte des moyens (84) adaptés à réaliser la connexion d'une deuxième extrémité (32) dudit raccord avec une extrémité (34) d'une deuxième ligne par déplacement sur un même alignement de l'extrémité de ladite deuxième ligne (37) et de ladite deuxième extrémité (32) dudit raccord.

5. - Dispositif selon la revendication 4 permettant la connexion de l'une des extrémités (22 ou 32) dudit raccord sur une extrémité (20 ou 34) d'une ligne, caractérisé en ce qu'il comporte un connecteur verrouillable permettant d'effectuer une connexion et un verrouillage dudit connecteur (32 ou 34).

6. - Dispositif selon la revendication 5, caractérisé en ce qu'il comporte des moyens de commande dudit connecteur (20, 34) permettant d'effectuer le verrouillage dudit connecteur à partir de ladite installation principale.

7. - Dispositif selon l'une quelconques des revendications précédentes, caractérisé en ce qu'il comporte des moyens d'immobilisation (40) dudit cadre sur ladite installation éloignée (5).

8. - Dispositif selon la revendication 7, caractérisé en ce que ledit organe d'approche comporte au moins un vérin mouflé (44).

9. - Dispositif selon la revendication 7, caractérisé en ce que ledit organe d'approche comporte au moins un vérin (81) dont l'axe est sensiblement parallèle audit axe de translation d'approche et en ce que ledit vérin est situé à l'intérieur des montants (80) dudit dispositif.

10. - Méthode de raccordement à distance utilisant le dispositif selon les revendications 1 à 9, caractérisée par la succession des étapes suivantes :

- on effectue la descente dudit cadre à partir de l'installation principale jusqu'à l'installation distante au moyen de l'élément de sustentation,

- on réalise une combinaison de mouvements d'une part de l'élément de sustentation et d'autre part, soit de l'organe support, soit de l'organe de suspension, de manière à placer ledit raccord coudé dans une position prédéterminée.

11. - Méthode selon la revendication 10, caractérisée en ce qu'après avoir placé ledit raccord dans ladite position prédéterminée, on effectue une première connexion de ladite première extrémité dudit raccord avec ladite première extrémité de ladite première ligne.

12. - Méthode caractérisée en ce qu'après avoir effectué l'étape selon la revendication 11, on aligne ladite extrémité de ladite deuxième ligne avec ladite extrémité du raccord et on procède à leur rapprochement jusqu'à réaliser une deuxième connexion effective de ces deux éléments.

13. - Méthode selon les revendications 11 ou 12 où lesdites connexions sont effectuées avec des connecteurs verrouillables, caractérisée en ce que l'on effectue le verrouillage de ladite première connexion avant ou simultanément celui de ladite deuxième connexion.

14. - Methode selon la revendication 13, caractérisée en ce que l'une ou l'autre desdites connexions est réalisée depuis l'installation principale.

**Patentansprüche**

1. Vorrichtung zum Ferneinsetzen einer Krümmerverbindung an einer entfernten Anordnung von einer Hauptanlage aus, die oberhalb der entfernten Anordnung (5) sich befindet, wobei die Vorrichtung ein Stützgestell umfaßt und die Krümmerverbindung (4) wenigstens zwei Enden (22, 32) hat, von denen wenigstens eines mit einem Ende (20) einer ersten fest mit dieser entfernten Anordnung (5) verbundenen ersten Leitung zusammenwirkt, wobei das Gestell ein Organ umfaßt, das seine Aufhängung (46) an einem Stützelement ermöglicht, das mit der Hauptinstallation und einem Stützorgan (71) für die Krümmerverbindung verbunden ist, wobei diese Organe an diesem Gestell befestigt sind, dadurch gekennzeichnet, daß wenigstens eines dieser Organe relativ zum Gestell beweglich ist.

2. Vorrichtung nach Anspruch 1, dadurch gekennzeichnet, daß dieses Stützorgan (71) oder dieses Aufhängeorgan (46) Mittel (47, 48, 50, 51, 52, 53, 54, 55, 60 bis 67, 69) umfaßt, die es ermöglichen, sich relativ zu dieser Vorrichtung in einer Ebene zu bewegen, die im wesentlichen senkrecht zur Achse des Abstützelements ist.

3. Vorrichtung nach einem der Ansprüche 1 und 2, dadurch gekennzeichnet, daß das Stützorgan (71) beweglich und Positionierungseinrichtungen zugeordnet ist, die in Kombination ein Annäherungsorgan (44, 43) und ein Positionierungsorgan (53 bis 55, 60 bis 71) umfassen, wobei dieses Annährungsorgan eine Translationsbewegung längs einer Achse einer Traverse (42) ausführt, auf der dieses Positionierorgan angeordnet ist, wobei dieses Positionierorgan so ausgelegt ist, daß es wenigstens eine Drehung und wenigstens zwei Translationen ausführt, wobei die Richtungen dieser Translationen untereinander nicht einen Winkel von null bilden und sämtlich senkrecht zur Translationsannäherungsachse verlaufen, wobei diese Rotation mit ihrer Achse parallel zur Translationsannäherungsachse liegt.

4. Vorrichtung nach Anspruch 3, dadurch gekennzeichnet, daß sie Mittel (84) umfaßt, die so ausgebildet sind, daß sie die Verbindung eines zweiten Endes (32) dieser Verbindung mit einem Ende (34) einer zweiten Leitung durch Verschiebung auf ein und der gleichen Ausrichtung des Endes dieser zweiten Leitung (37) und dieses zweiten Endes (32) dieser Verbindung ausführen.

5. Vorrichtung nach Anspruch 4, die die Verbindung eines der Enden (22 oder 32) dieser Verbindung gegen ein Ende (20 oder 34) einer Leitung gestattet, dadurch gekennzeichnet, daß sie einen verriegelbaren Verbinder umfaßt, der es ermöglicht, eine Verbindung und eine Verriegelung dieses Verbinders (32 oder 34) vorzunehmen.

6. Vorrichtung nach Anspruch 5, dadurch gekennzeichnet, daß sie Mittel zur Steuerung dieses Verbinders (20, 34) umfaßt, die es ermöglichen, die Verriegelung dieses Verbinders, ausgehend von dieser Hauptanlage, vorzunehmen.

7. Vorrichtung nach einem der vorhergehenden Ansprüche, dadurch gekennzeichnet, daß sie Mittel zur Unbeweglichmachung (40) dieses Gestells gegen diese entfernte Anordnung (5) umfaßt.

8. Vorrichtung nach Anspruch 7, dadurch gekennzeichnet, daß dieses Annährungsorgan wenigstens einen Flaschenzug-Stellzylinder (44) umfaßt.

9. Vorrichtung nach Anspruch 7, dadurch gekennzeichnet, daß dieses Annährungsorgan wenigstens einen Stellzylinder (81) umfaßt, dessen Achse im wesentlichen parallel zu dieser Translationsannäherungsachse ist und daß dieser Stellzylinder im Inneren der Pfosten (80) dieser Vorrichtung angeordnet ist.

10. Verfahren zur Fernverbindung, unter der Verwendung der Vorrichtung nach einem der Ansprüche 1 bis 9, gekennzeichnet durch die Aufeinanderfolge nachstehender Stufen:
  – man nimmt die Absenkung des Rahmens ausgehend von der Hauptanlage bis zur entfernt befindlichen Anordnung vermittels des Stützelements vor,
  – man realisiert eine Kombination von Bewegungen einerseits des Stützelements und andererseits entweder des Stützorgans oder des Aufhängeorgans, derart, daß diese Krümmerverbindung in eine vorbestimmte Position gebracht wird.

11. Verfahren nach Anspruch 10, dadurch gekennzeichnet, daß man nach Anordnung dieser Krümmerverbindung in dieser vorbestimmten Position eine erste Verbindung des ersten Endes dieser Verbindung mit dem ersten Ende der ersten Leitung durchführt.

12. Verfahren, dadurch gekennzeichnet, daß nach Vornahme der Stufe gemäß Anspruch 11 man das Ende dieser zweiten Leitung mit diesem Ende der Verbindung ausrichtet und daß man deren Annäherung vornimmt, bis eine zweite effektive Verbindung dieser beiden Elemente realisiert ist.

13. Verfahren nach einem der Ansprüche 11 oder 12, wo diese Verbindungen mit verriegelbaren Verbindern durchgeführt werden, dadurch gekennzeichnet, daß man die Verriegelung dieser ersten Verbindung mit oder gleichzeitig zu der der zweiten Verbindung vornimmt.

14. Verfahren nach Anspruch 13, dadurch gekennzeichnet, daß die eine oder die andere dieser Verbindungen, ausgehend von der Hauptanlage, vorgenommen wird.

**Claims**

1. Device for remote positioning of an elbow coupling onto an installation located at a distance from a main installation which is located above the remote installation (5), this device comprising a supporting frame, the elbow coupling (4) having at least two ends (22, 32), at least one being connected to one end (20) of a first line forming part of the said remote installation (5), the said frame including a device enabling it to be suspended (46) from a supporting member connected to the main installation and a support (71) for the said elbow coupling, the said devices being fixed to the said support, characterised in that at least one of the said devices is movable relative to the said frame.

2. Device in accordance with claim 1, characterised in that the said support member (71) or the said suspension device (46) comprises a means (47, 48, 50, 51, 52, 53, 54, 55, 60 to 67, 69) enabling it to be moved relative to the said device in a plane substantially perpendicular to the axis of the supporting member.

3. Device in accordance with one of claims 1 and 2, characterised in that the support member (71) is mobile and is associated with a means of positioning comprising, in combination, an approach device (44, 43) and a positioning device (53 to 55, 60 to 71), the said approach device providing a translational movement along one axis of a cross member (42) on which is located the said positioning device, the said positioning device being designed to provide at least one rotational movement and at least two translational movements, the directions of the said translational movements not forming a zero angle between them and being both perpendicular to the said translation axis of approach, the said rotation having its axis parallel to the translation axis of approach.

4. Device in accordance with claim 3, characterised in that it comprises a means (84) designed to connect a second end (32) of the said coupling to one end (34) of a second line by displacement over the same alignment of the end of the said second line (37) and the said second end (32) of the said coupling.

5. Device in accordance with claim 4, permitting one of the ends (22 or 32) of the said coupling to be connected onto one end (20 or 34) of a line, characterised in that it comprises a lockable connector for connecting and locking the said connector (32 or 34).

6. Device in accordance with claim 5, characterised in that it comprises a means for controlling the said connector (20, 34) enabling the said connector to be locked from the said main installation.

7. Device in accordance with any one of the preceding claims, characterised in that it comprises a means for immobilising (40) the said frame onto the said remote installation (5).

8. Device in accordance with claim 7, characterised in that the said approach device includes at least one actuator and pulleys (44).

9. Device in accordance with claim 7, characterised in that the said approach device comprises at least one actuator (81) where the axis is basically parallel to the said translation axis of approach and in that the said actuator is located within the uprights (80) for the said device.

10. Method of remote connection using the device in accordance with claims 1 to 9, characterised by the following sequences:
  – the said frame is lowered from the main installation down to the remote installation by means of the supporting member
  – movements of the supporting member and the support or the suspension device in order that the said elbow coupling is located in a predetermined position.

11. Method in accordance with claim 10, characterised in that, after having located the said coupling in the said predetermined position, the said first end of the said coupling is first connected to the said first end of the said first line.

12. Method characterised in that, after having carried out the sequence in accordance with claim 11, the said end of the said second line is aligned with the said coupling end and these are brought together until a second connection is effectively made between these two items.

13. Method in accordance with claims 11 or 12 where the said connections are carried out by means of lockable connectors, characterised in that locking of the said first connection is carried out before or at the same time as that for the said second connection.

14. Method in accordance with claim 13, characterised in that either of the said connections is carried out from the main installation.

FIG.1

EP 0 251 882 B1

**FIG.2**

**FIG.3**

**FIG.4**

EP 0 251 882 B1

FIG.5

EP 0 251 882 B1

# FIG.6

**FIG.7**

EP 0 251 882 B1